# EUROPÄISCHE PATENTSCHRIFT

(11) **EP 3 494 294 B1**
(45) Veröffentlichungstag und Bekanntmachung des Hinweises auf die Patenterteilung: **17.06.2020**
(21) Anmeldenummer: 17740387.0
(22) Anmeldetag: 18.07.2017
(51) Int. Cl.: F01N 3/027, F01N 3/20, F01N 3/28

(54) **ELEKTRISCH BEHEIZBARER WABENKÖRPER ZUR ABGASBEHANDLUNG MIT EINER MEHRZAHL VON HEIZELEMENTEN**
ELECTRICALLY HEATABLE HONEYCOMB BODY FOR EXHAUST GAS TREATMENT HAVING A PLURALITY OF HEATING ELEMENTS
CORPS ALVÉOLAIRE POUVANT ÊTRE CHAUFFÉ ÉLECTRIQUEMENT POUR LE TRAITEMENT DES GAZ D'ÉCHAPPEMENT COMPORTANT UNE PLURALITÉ D'ÉLÉMENTS CHAUFFANTS

(30) Priorität: 04.08.2016 DE 102016214495
(43) Veröffentlichungstag der Anmeldung: 12.06.2019
(73) Patentinhaber: Vitesco Technologies GmbH, 30165 Hannover (DE)
(72) Erfinder: HIRTH, Peter, 51503 Rösrath (DE); PABST, Christoph, 49326 Melle (DE)
(86) Internationale Anmeldenummer: PCT/EP2017/068066
(87) Internationale Veröffentlichungsnummer: WO 2018/024477

(56) Entgegenhaltungen:
- EP-A1- 0 603 222
- DE-A1- 4 223 134
- US-A- 5 584 175
- US-B2- 6 540 816

## Beschreibung

Die vorliegende Erfindung betrifft das Gebiet der elektrisch beheizbaren Wabenkörper, insbesondere für den Einsatz bei der Abgasreinigung von Verbrennungskraftmaschinen, vorzugsweise in Kraftfahrzeugen. Elektrisch beheizbare Wabenkörper werden hauptsächlich bei Kraftfahrzeugen als von Abgas durchströmbare Katalysator-Trägerkörper eingesetzt, die bei bestimmten Betriebsbedingungen, z. B. bei einem Kaltstart, elektrisch beheizt werden, um schnell eine für katalytische Reaktionen geeignete Temperatur zu erreichen, bzw. diese auch bei ungünstigen Bedingungen beizubehalten.

Elektrisch beheizbare Wabenkörper und deren Komponenten müssen trotz hoher thermischer Wechselbelastungen, aggressiver Umgebungsbedingungen und möglicher Ablagerungen eine lange Lebensdauer bei gleichbleibender elektrischer Funktion erreichen, was hohe Anforderungen an die Materialien und Konstruktion stellt.

Bei neueren Entwicklungen werden statt der in Kraftfahrzeugen bisher weithin üblichen 12 V [Volt] im Versorgungsnetz auch Systeme mit einer Versorgungsspannung von 24, 36 oder sogar 48 V in Betracht gezogen. Dies stellt auch besondere Anforderungen an elektrische Isolierungen und den zu wählenden elektrischen Widerstand in elektrisch beheizbaren Wabenkörpern. Bei höheren Spannungen ist es kaum noch möglich, einen Wabenkörper als Ganzes als Heizwiderstand zu gestalten. Es müssen gesonderte Heizelemente vorgesehen werden.

Aus der EP 0 603 222 B1 ist es schon bekannt, einen elektrischen Leiter als Sensor oder Heizleiter elektrisch isoliert im Inneren eines Wabenkörpers zu verlegen. Dazu wird er elektrisch isoliert zwischen zwei Metallblechen angeordnet, die entweder eine glatte oder eine gewellte Blechlagen zum Aufbau eines Wabenkörpers bilden. In dieser Schrift ist auch prinzipiell beschrieben, wie ein solcher Heizleiter durch das Mantelrohr nach außen geführt wird, wo er dann an eine Stromversorgung angeschlossen werden kann. Für Heizleiter mit größeren Querschnitten oder für höhere Spannungen geeigneten Isolierungen wird es aber immer schwieriger das beschriebene Konzept zu verwirklichen, weil die Blechlage mit dem Heizleiter immer steifer und schwerer zu verarbeiten wird.

Aus der EP 0569 400 B1 sind auch Konzepte bekannt, Teile der einen Wabenkörper bildenden Blechlagen durch Schlitze und besondere Gestaltung der Blechlagen als Heizleiter zu benutzen. Auch hier wird es mit zunehmender Versorgungsspannung immer schwieriger, geeignete Widerstände einzustellen und die Durchschlagsfestigkeit der elektrischen Isolierungen sicherzustellen.

In der EP 2773 857 B1 ist eine Anbringung eines elektrischen Heizelementes an einer Stirnseite eines Wabenkörpers bekannt, insbesondere in einer stirnseitigen Nut. Dies erlaubt zwar die Anbringung auch dicker Heizelemente, führt aber zu einer lediglich stirnseitigen Aufheizung des Wabenkörpers.
Weiterhin ist es aus der EP 0483 256 B1 bekannt, einen Wabenkörper mit internen Öffnungen und Strömungsleitflächen zu versehen, um den Verlauf der Strömung im Wabenkörper zu beeinflussen.

Aufgabe der vorliegenden Erfindung ist es, einen Aufbau für einen elektrisch beheizbaren Wabenkörper zu schaffen, der auch für Versorgungsspannungen über 12 V geeignet ist und bei dem die Verteilung der Heizleistung im Inneren des Wabenkörpers durch Wahl der Konstruktionsparameter in weiten Grenzen gewählt werden kann. Außerdem soll der Druckverlust durch die elektrische Beheizung für ein den Wabenkörper durchströmendes Gas gering gehalten werden.

Zur Lösung dieser Aufgabe dient ein Wabenkörper gemäß dem unabhängigen Anspruch 1. Vorteilhafte Ausgestaltungen, die einzeln oder in technisch sinnvollen Kombinationen miteinander angewendet werden können, sind in den abhängigen Ansprüchen angegeben.

Ein erfindungsgemäßer von einem Gas von einer ersten Stirnseite zu einer zweiten Stirnseite in einer Strömungsrichtung durchströmbarer Wabenkörper ist aufgebaut aus zumindest teilweise strukturierten Blechlagen, die aufeinander geschichtet und miteinander verschlungen sind und für das Gas durchlässige Kanäle bilden, wobei mindestens eine der Blechlagen durch mindestens zwei etwa parallele in Strömungsrichtung mit Abstand hintereinander angeordnete und quer zur Strömungsrichtung verlaufende langgestreckte elektrische Heizelemente verstärkt oder ersetzt ist. Ferner sind in den Blechlagen Öffnungen und/oder Strömungsleitelemente vorhanden, die das Gas auch in von den Heizelementen zumindest teilweise blockierte Bereiche des Wabenkörpers und aus diesen heraus lenken können.

In der EP 0 603 222 B1 ist beispielhaft beschrieben, wie ein Heizelement in eine glatte oder gewellte Blechlage als Verstärkung integriert und daraus ein Wabenkörper gewickelt werden kann. Man sieht jedoch, dass dieser Methode bei zunehmender Dicke des Heizelementes Grenzen gesetzt sind. Insbesondere, wenn die Dicke des Heizelementes in die gleiche Größenordnung kommt wie die Abmessungen der Kanäle eines Wabenkörpers im Querschnitt, kann man erfindungsgemäß die betreffende Blechlage einfach weglassen, da mindestens zwei Heizelemente praktisch die gleiche mechanische Funktion wie eine gewellte Blechlage beim Aufwickeln eines Wabenkörpers übernehmen können. Des Weiteren sind in US 6,540,816 B2, DE 42 23 134 A1, und US 5,584,175 A Wabenkörper mit darin angeordneten Heizelementen gezeigt.

Elektrische Heizelemente, die meist auch noch von einer elektrischen Isolierung umgeben sind, haben bei der vorliegenden Anwendung jedenfalls so große Querschnitte, dass sie einen erheblichen Einfluss auf den Strömungswiderstand, den der Wabenkörper einem hindurchströmenden Gas entgegensetzt, haben. Die Heizelemente versperren einen Teil des sonst für die Strömung zur Verfügung stehenden Querschnitts des Wabenkörpers. Daher werden erfindungsgemäß zwei oder mehr Heizelemente, die zur ausreichenden Beheizung in Strömungsrichtung hintereinander benötigt werden, gerade so in Strömungsrichtung hintereinander angeordnet, dass das zweite Heizelement und eventuell weitere folgende keine zusätzlichen Querschnittsflächen mehr versperren. Natürlich kann es sein, dass zur Beheizung eines Wabenkörpers je nach dessen Bauform mehrere Heizelemente in einer Querschnittsebene des Wabenkörpers benötigt werden, dann gelten die obigen Ausführungen sinngemäß für in Strömungsrichtung hinter diesen Heizelementen angeordnete weitere Heizelemente. Die Heizelemente können in schon bekannter Weise in eine oder mehrere der Blechlagen des Wabenkörpers als Verstärkung integriert sein, beispielsweise durch Walzen oder fügetechnische Verbindung (Schweißen, Löten, Sintern etc.), jedoch kann bei den hier behandelten Anwendungen die Dimension des Querschnitts der Heizelemente in der gleichen Größenordnung liegen wie die Querschnitte der Kanäle des Wabenkörpers oder sogar darüber. Dies erlaubt es, statt einer gewellten oder einer glatten Blechlage einfach zwei oder mehr Heizelemente mit den übrigen Blechen zu schichten und zu Wickeln. Alle hier denkbaren Reihenfolgen beim Schichten sind möglich, so dass die Heizelemente entweder an zwei benachbarte glatte Lagen oder an zwei benachbarte gewellte Lagen oder aber an eine benachbarte gewellte und eine glatte Lagen angrenzen können. Hier können fertigungstechnische Gesichtspunkte berücksichtigt werden sowie Fragen der Wärmeleitung an die benachbarten Bleche oder der Umströmung durch das Gas. Während man bei der Integration der Heizelemente in eine der Blechlagen unter Umständen den zusätzlichen Platzbedarf bei deren Formgebung und eventuell der Formgebung benachbarter Lagen berücksichtigen muss, ist dies nicht erforderlich, wenn man eine der Blechlagen einfach durch zwei oder mehr Heizelemente ersetzt. Bei Bedarf können auch in Strömungsrichtung vor, zwischen und/oder hinter den Heizelementen strukturierte, insbesondere gewellte, Blechlagenabschnitte angeordnet werden, die die gleiche Höhe wie die Heizelemente haben.

In einer ersten bevorzugten Ausführungsform der Erfindung ist der Wabenkörper aus abwechselnd angeordneten glatten und gewellten Blechlagen, die miteinander verschlungen sind, aufgebaut, wobei mindestens eine glatte Blechlage durch Heizelemente verstärkt oder ersetzt ist. Bei dieser Bauform kann Wärme von den Heizelementen über Berührungsstellen mit benachbarten gewellten Blechlagen abgeführt werden und die Heizelemente sind von Gas umströmbar, so dass auch direkt Wärme an das durch den Wabenkörper strömende Gas abgegeben werden kann.

Bei einer anderen Ausführungsform ist der erfindungsgemäße Wabenkörper aus abwechselnd angeordneten glatten und gewellten Blechlagen, die miteinander verschlungen sind, aufgebaut, wobei mindestens eine gewellte Blechlage durch Heizelemente verstärkt oder ersetzt ist. Die Kanäle, die von der gewellten Blechlage gebildet werden, bzw. der Spalt, der bei vollständigem Ersetzen der Blechlage durch die Heizelemente zwischen zwei glatten Blechlagen entsteht, wird durch die Heizelemente weitgehend blockiert, so dass bei dieser Variante die Wärmeabfuhr vom Heizleiter zu den benachbarten Blechlagen erfolgt, was je nach Anwendung der Beheizung vorteilhaft sein kann.

Die Heizelemente sind vorzugsweise Heizleiter mit einem sie elektrisch isoliert umgebenden Metallmantel. Solche Mantelleiter und ihre Durchführung durch ein Mantelrohr eines Wabenkörpers zu einem elektrischen Anschluss außerhalb des Wabenkörpers sind z. B. aus der oben erwähnten EP 0 603 222 B bekannt und können in fast jeder gewünschten Länge und mit geeignetem Leiterquerschnitt hergestellt werden.

Typischerweise haben Heizelemente einen runden Querschnitt, jedoch ist es erfindungsgemäß auch möglich Heizleiter mit abgeflachtem Querschnitt zu verwenden, was insbesondere durch Walzen üblicher Mantelleiter erreicht werden kann. In diesem Fall werden die Heizelemente mit der größeren Querschnittsdimension in Strömungsrichtung und mit der kleineren Querschnittsdimension in radialer Richtung (quer zur Strömungsrichtung) im Wabenkörper angeordnet.

Erfindungsgemäß haben die elektrischen Heizelemente einen elektrisch leitenden Querschnitt von 0, 02 bis 3 mm², vorzugsweise 0,05 bis 2 mm² [Quadratmillimeter]. Die genaue Dimensionierung hängt von der Versorgungsspannung, der gewünschten elektrischen Leistung und der Länge des Heizelementes ab, die wiederum von der Bauform und Größe des betreffenden elektrisch beheizbaren Wabenkörpers abhängt.

Erfindungsgemäß sind die Heizelemente für Betriebsspannungen von 24 bis 48 V [Volt] ausgelegt und können gemeinsam eine elektrische Leistung von 500 bis 5000 W [Watt], vorzugsweise 1000 bis 3000 W, aufnehmen, wodurch eine schnelle und ausreichende Beheizung des Wabenkörpers bei verschiedenen Betriebsbedingungen möglich wird.

Wie oben erwähnt blockieren die Heizelemente bestimmte Querschnittsflächen im Wabenkörper, die dadurch nicht für eine Durchströmung zur Verfügung stehen. Dies wird erfindungsgemäß erheblich abgemildert, da in den Blechlagen Öffnungen und/oder Strömungsleitelemente vorhanden sind, die das Gas auch in von den Heizelementen zumindest teilweise blockierte Bereiche des Wabenkörpers und aus diesen heraus lenken können. Diese Ausführungsform verbessert den Wärmeaustausch direkt zum durchströmenden Gas und ist insbesondere vorteilhaft, wenn die Heizelemente in eine gewellte Lage integriert sind, diese ersetzen oder wie oben erwähnt in Verbindung mit gewellten vor, zwischen und/oder hinter den Heizelementen angeordneten Blechlagenabschnitten eingesetzt werden, die die gleiche Höhe wie die Heizelemente haben. Auf diese Weise können fast alle Bereiche des Wabenkörpers, insbesondere auch die zwischen den Heizelementen, von Gas durchströmt werden und zur Abgasbehandlung beitragen.

Es sei erwähnt, dass erfindungsgemäß mindestens drei Heizelemente in dem Wabenkörper vorhanden sein können, die in Strömungsrichtung unterschiedliche Abstände zueinander haben. Dies erlaubt, den Wabenkörper in Strömungsrichtung inhomogen zu beheizen, beispielsweise im vorderen Bereich stärker als im hinteren Bereich, was z. B. in einer Kaltstartphase vorteilhaft sein kann.

Wie aus dem Stand der Technik bekannt, ist es für die Stabilität eines Wabenkörpers oft sinnvoll, dass die Blechlagen untereinander verbunden sind. Erfindungsgemäß können auch die Heizelemente zumindest in Teilbereichen fügetechnisch mit benachbarten Blechlagen verbunden sein, um eine große Stabilität und bessere Wärmeleitung zu erreichen.

Ausführungsbeispiele der Erfindung und weitere Einzelheiten werden anhand der folgenden Zeichnung näher erläutert, wobei in verschiedenen Figuren gezeigte Merkmale erfindungsgemäß auch gemeinsam Anwendung finden können. Es zeigen:
- Fig. 1: einen schematischen Querschnitt durch einen erfindungsgemäßen Wabenkörper,
- Fig. 2: einen schematischen Längsschnitt durch einen erfindungsgemäßen Wabenkörper mit zur Veranschaulichung um 90° gedrehter Wellung,
- Fig. 3: einen schematischen Ausschnitt eines Längsschnittes durch einen erfindungsgemäßen Wabenkörper,
- Fig. 4: schematisch den Aufbau eines Blechstapels zur Herstellung eines erfindungsgemäßen Wabenkörpers und
- Fig. 5: schematisch eine andere Anordnung von Blechen und Heizelementen zum Aufbau eines erfindungsgemäßen Wabenkörpers.

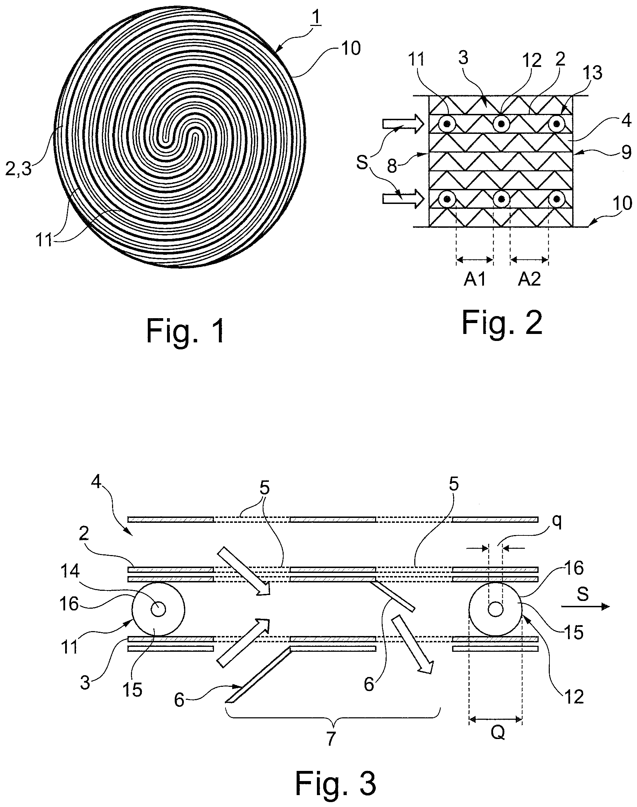

Fig. 1 zeigt schematisch einen Querschnitt durch einen erfindungsgemäßen elektrisch beheizbaren Wabenkörper 1, der aus glatten 2 und gewellten 3 Blechlagen aufgebaut ist. Im vorliegenden Ausführungsbeispiel handelt es sich um einen aus einem verschlungenen Blechstapel mit zwei Heizelementen 11 aufgebauten Wabenkörper, was bedeutet, dass auch zwei Heizelemente 11 zur Beheizung eines Querschnittsbereiches eingesetzt werden. Der ganze Wabenkörper ist von einem Mantelrohr umgeben, durch welches die Heizelemente 11 in an sich bekannter Weise nach außen geführt werden zu einem nicht dargestellten elektrischen Anschluss.

Fig. 2 zeigt einen schematischen Längsschnitt durch einen erfindungsgemäßen Wabenkörper 1, wobei gewellte Blechlagen 3 durch Zickzacklinien veranschaulicht sind, obwohl die Wellung tatsächlich 90° verdreht zu den gezeigten Zickzacklinien verläuft. Der Wabenkörper 1 ist aus abwechselnd angeordneten glatten Blechlagen 2 und gewellten Blechlagen 3, die Kanäle 4 bilden, aufgebaut, wobei eine der Blechlagen durch drei Heizelemente 11, 12, 13 verstärkt (oder auch komplett durch diese ersetzt) ist. Durch den Wabenkörper 1 kann von einer ersten Stirnseite 8 zu einer zweiten Stirnseite 9 ein Gas in einer Strömungsrichtung S strömen, wobei die drei Heizelemente in Strömungsrichtung S so hintereinander angeordnet sind, dass sie jeweils die gleichen Bereiche des Strömungsquerschnittes blockieren. Das erste Heizelement 11 und das zweite Heizelement 12 haben in Strömungsrichtung S den Abstand A1, das zweite Heizelement 12 und das dritte Heizelement 13 haben den Abstand A2, wobei A1 und A2 unterschiedlich gewählt sein können, je nach der gewünschten Verteilung der Wärmeleistung im Wabenkörper 1. Fig. 3 zeigt schematisch einen Teil eines Längsschnittes durch einen erfindungsgemäßen Wabenkörper 1, der wiederum aus glatten Blechlagen 2 und gewellten Blechlagen 3 aufgebaut ist. In eine gewellte Blechlage 3 sind in Strömungsrichtung S hintereinander ein erstes Heizelement 11 und ein zweites Heizelement 12 integriert. Auf diese Weise würde ein für das durch den Wabenkörper strömende Gas blockierter Bereich 7 entstehen, wenn nicht Öffnungen 5 und/oder Strömungsleitelemente 6 in den Blechlagen 2, 3 vorhanden wären, die zu einer Durchströmung auch des Bereiches 7 zwischen den Heizelementen führen. Als Öffnungen 5 und Strömungsleitelemente 6 kommen viele aus dem Stand der Technik bekannte Ausführungsformen in Betracht. Im vorliegenden Ausführungsbeispiel haben die Heizelemente 11, 12 einen Querschnitt Q, der ungefähr dem Querschnitt der Kanäle 4 entspricht. Die Heizleiter 14 im Inneren der Heizelemente 11, 12 sind durch eine elektrische Isolierschicht 15 von einem äußeren Metallmantel 16 umgeben.

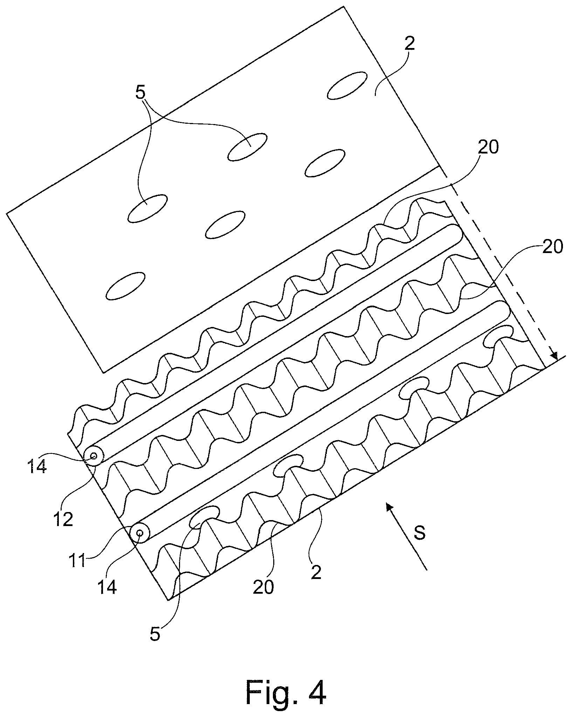

Fig. 4 zeigt schematisch ein Ausführungsbeispiel für den Aufbau eines Stapels von glatten Blechlagen 2 und gewellten Blechlagen 3, wobei hier eine Ausführungsform dargestellt ist, bei der nur Blechlagenabschnitte 20 mit dazwischen angeordneten Heizelementen 11, 12 statt einer ganzen gewellten Blechlage vorhanden sind. In diesem Beispiel sind in den glatten Blechlagen 2 benachbart zu den Heizelementen 11, 12 Öffnungen 5 vorhanden, die zur besseren Verteilung einer Gasströmung im Wabenkörper beitragen.

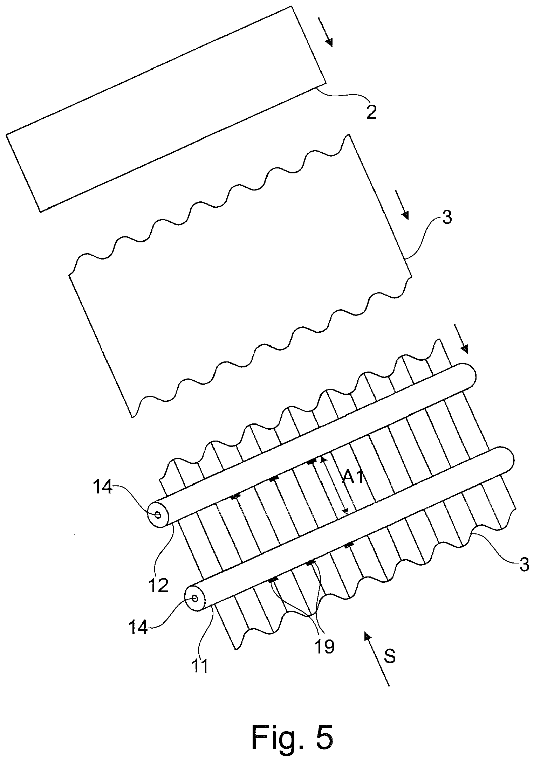

Fig. 5 zeigt schematisch einen alternativen Aufbau eines Stapels von Blechlagen 2, 3 zum Wickeln eines Wabenkörpers. In diesem Beispiel liegen zwei Heizelemente 11, 12 mit einem Abstand A1 zwischen zwei gewellten Blechlagen 3. Der restliche Stapel ist aus abwechselnden glatten 2 und gewellten 3 Blechlagen aufgebaut. Bei dieser Anordnung entstehen keine vollständig für ein durchströmendes Gas blockierten Bereiche. Um die Wärmeleitung zu den benachbarten gewellten Blechlagen zu verbessern, können fügetechnische Verbindungen 19, insbesondere Lötverbindungen, zwischen den Heizelementen 11, 12 und den angrenzenden Wellenbergen vorgesehen werden. Ganz generell können Lötverbindungen, bei glatten Blechlagen auch großflächige Verbindungen, zwischen den Heizleitern und angrenzenden Blechlagen 2, 3 die Wärmeverteilung im Wabenkörper verbessern.
Die vorliegende Erfindung eignet sich besonders zum Einsatz in Abgasreinigungsanlagen von Kraftfahrzeugen, insbesondere bei einer Stromversorgung mit 24, 36 oder 48 V und ist kaum anfällig für elektrische Überschläge, beispielsweise im Falle von Ablagerungen oder Korrosion.

## Patentansprüche

1. Von einem Gas von einer ersten Stirnseite (8) zu einer zweiten Stirnseite (9) in einer Strömungsrichtung (S) durchström- barer Wabenkörper (1), aufgebaut aus zumindest teilweise strukturierten Blechlagen (2, 3), die aufeinander geschichtet und miteinander verschlungen sind und für das Gas durchlässige Kanäle (4) bilden, wobei mindestens eine der Blechlagen (2, 3) durch mindestens zwei parallele in Strömungsrichtung mit Abstand hintereinander angeordnete und quer zur Strömungsrichtung verlaufende langgestreckte elektrische Heizelemente (11, 12) verstärkt oder ersetzt ist, **dadurch gekennzeichnet, dass** in den Blechlagen (2, 3) Öffnungen (5) und/oder Strömungsleitelemente (6) vorhanden sind, die das Gas auch in von den Heizelementen (11, 12) zumindest teilweise blockierte Bereiche (7) des Wabenkörpers (1) und aus diesen heraus lenken können.

2. Wabenkörper (1) nach Anspruch 1, wobei der Wabenkörper (1) aus abwechselnd angeordneten glatten (2) und gewellten (3) Blechlagen, die miteinander verschlungen sind, aufgebaut ist und wobei mindestens eine glatte Blechlage (2) durch Heizelemente (11, 12) verstärkt oder ersetzt ist.

3. Wabenkörper (1) nach Anspruch 1, wobei der Wabenkörper (1) aus abwechselnd angeordneten glatten (2) und gewellten (3) Blechlagen, die miteinander verschlungen sind, aufgebaut ist und wobei mindestens eine gewellte Blechlage (3) durch Heizelemente (11, 12) verstärkt oder ersetzt ist.

4. Wabenkörper (1) nach einem der vorhergehenden Ansprüche, wobei die Heizelemente (11, 12) Heizleiter (14) mit einem sie elektrisch isoliert umgebenden Metallmantel (16) sind.

5. Wabenkörper (1) nach einem der vorhergehenden Ansprüche, wobei die Heizelemente (11, 12) einen runden oder abgeflachten Querschnitt (Q) aufweisen.

6. Wabenkörper (1) nach einem der vorhergehenden Ansprüche, wobei die elektrischen Heizelemente (11, 12) einen elektrisch leitenden Querschnitt (q) von 0,02 bis 3 mm2 haben.

7. Wabenkörper (1) nach einem der vorhergehenden Ansprüche, wobei die Heizelemente (11, 12) für Betriebsspannungen von 24 bis 48 V ausgelegt sind und gemeinsam eine elektrische Leistung von 500 bis 5000 W aufnehmen können.

8. Wabenkörper (1) nach einem der vorhergehenden Ansprüche, wobei mindestens drei Heizelemente (11, 12, 13) in dem Wabenkörper (1) vorhanden sind, die in Strömungsrichtung (S) unterschiedliche Abstände (A1, A1) zueinander haben.

9. Wabenkörper (1) nach einem der vorhergehenden Ansprüche, wobei die Blechlagen (2, 3) untereinander und/oder mit den Heizelementen (11, 12) zumindest in Teilbereichen durch fügetechnische Verbindungen (19) verbunden sind.

## Claims

1. Honeycomb body (1) which can be flowed through by a gas from a first end face (8) to a second end face (9) in a flow direction (S), constructed from at least partially structured sheet metal layers (2, 3), which are layered one on top of the other and entwined with each other and which form gas-permeable channels (4), wherein at least one of the sheet metal layers (2, 3) is reinforced or replaced by at least two elongate electrical heating elements (11, 12) which are arranged approximately parallel and with a spacing one behind the other in the flow direction and extend transversely to the flow direction, **characterized in that**, in the sheet metal layers (2, 3), openings (5) and/or flow-guiding elements (6) are present, which can divert the gas even into regions (7) of the honeycomb body (1) which are at least partially blocked by the heating elements (11, 12), and out of said regions.

2. Honeycomb body (1) according to Claim 1, wherein the honeycomb body (1) is constructed from alternately arranged smooth (2) and corrugated (3) sheet metal layers intertwined with each other, and wherein at least one smooth sheet metal layer (2) is reinforced or replaced by heating elements (11, 12).

3. Honeycomb body (1) according to Claim 1, wherein the honeycomb body (1) is constructed from alternately arranged smooth (2) and corrugated (3) sheet metal layers intertwined with each other, and wherein at least one corrugated sheet metal layer (3) is reinforced or replaced by heating elements (11, 12).

4. Honeycomb body (1) according to any of the preceding claims, wherein the heating elements (11, 12) are heating conductors (14) with a metal jacket (16) surrounding them in an electrically insulated manner.

5. Honeycomb body (1) according to any of the preceding claims, wherein the heating elements (11, 12) have a round or flattened cross section (Q).

6. Honeycomb body (1) according to any of the preceding claims, wherein the electrical heating elements (11, 12) have an electrically conductive cross section (q) of 0.02 to 3 mm2.

7. Honeycomb body (1) according to any of the preceding claims, wherein the heating elements (11, 12) are designed for operating voltages of 24 to 48 V and can collectively receive an electrical power of 500 to 5000 W.

8. Honeycomb body (1) according to any of the preceding claims, wherein at least three heating elements (11, 12, 13) are present in the honeycomb body (1), which have different spacings (A1, A1) to one another in the flow direction (S).

9. Honeycomb body (1) according to any of the preceding claims, wherein the sheet metal layers (2, 3) are connected to each other and/or to the heating elements (11, 12) at least in partial regions by connections (19) produced by joining technology.

## Revendications

1. Corps en nid d'abeille (1) pouvant être traversé par un gaz d'un premier côté frontal (8) à un deuxième côté frontal (9) dans un sens d'écoulement (S), ledit corps en nid d'abeille étant construit à partir de couches de tôle (2, 3) au moins partiellement structurées qui sont superposées les unes sur les autres, qui sont entrelacées les unes avec les autres et qui forment des canaux (4) laissant passer le gaz, au moins une des couches de tôle (2, 3) étant renforcée ou remplacée par au moins deux éléments chauffants électriques allongés (11, 12) qui sont disposés en parallèle l'un derrière l'autre à distance dans le sens d'écoulement et qui s'étendent transversalement au sens d'écoulement, **caractérisé en ce que** des ouvertures (5) et/ou des éléments de guidage d'écoulement (6) sont présents dans les couches de tôle (2, 3) et permettent de dévier le gaz également vers les zones (7) du corps en nid d'abeille (1) au moins partiellement bloquées par les éléments chauffants (11, 12) et depuis celles-ci.

2. Corps en nid d'abeille (1) selon la revendication 1, le corps en nid d'abeille (1) étant construit à partir de couches de tôle lisses (2) et ondulées (3) disposées en alternance et entrelacées les unes avec les autres et au moins une couche de tôle lisse (2) étant renforcée ou remplacée par des éléments chauffants (11 , 12).

3. Corps en nid d'abeille (1) selon la revendication 1, le corps en nid d'abeille (1) étant construit à partir de couches de tôle lisses (2) et ondulées (3) disposées en alternance et entrelacées les unes avec les autres et au moins une couche de tôle ondulée (3) étant renforcée ou remplacée par des éléments chauffants (11, 12).

4. Corps en nid d'abeille (1) selon l'une des revendications précédentes, les éléments chauffants (11, 12) étant des conducteurs chauffants (14) pourvus d'une enveloppe métallique (16) qui les entoure en les isolant électriquement.

5. Corps en nid d'abeille (1) selon l'une des revendications précédentes, les éléments chauffants (11, 12) ayant une section transversale ronde ou aplatie (Q).

6. Corps en nid d'abeille (1) selon l'une quelconque des revendications précédentes, les éléments chauffants électriques (11, 12) ayant une section transversale (q) électriquement conductrice de 0,02 à 3 mm2.

7. Corps en nid d'abeille (1) selon l'une des revendications précédentes, les éléments chauffants (11, 12) étant conçus pour des tensions de fonctionnement allant de 24 à 48 V et pouvant absorber conjointement une puissance électrique de 500 à 5000 W.

8. Corps en nid d'abeille (1) selon l'une des revendications précédentes, au moins trois éléments chauffants (11, 12, 13) étant présents dans le corps en nid d'abeille (1) et étant à des distances différentes (A1, A1) les uns des autres dans le sens d'écoulement (S).

9. Corps en nid d'abeille (1) selon l'une des revendications précédentes, les couches de tôle (2, 3) étant reliées entre elles et/ou avec les éléments chauffants (11, 12) au moins dans certaines zones par des liaisons d'assemblage (19).
